(19) Europäisches Patentamt European Patent Office Office européen des brevets

(11) **EP 2 040 091 B1**

(12) **EUROPÄISCHE PATENTSCHRIFT**

(45) Veröffentlichungstag und Bekanntmachung des Hinweises auf die Patenterteilung:
**29.02.2012 Patentblatt 2012/09**

(51) Int Cl.:
***G01S 19/11*** *(2010.01)*    *G01S 19/51* *(2010.01)*
***G01S 19/23*** *(2010.01)*

(21) Anmeldenummer: **08016410.6**

(22) Anmeldetag: **18.09.2008**

(54) **Verfahren und Vorrichtung zur automatischen Bestimmung der Position von Transceivern von Navigationssignalen**

Method and device for automatically calculating the position of transceivers of navigation signals

Procédé et dispositif de détermination automatique de la position d'émetteurs-récepteurs de signaux de navigation

(84) Benannte Vertragsstaaten:
**DE ES FR GB IT NL**

(30) Priorität: **24.09.2007 DE 102007045711**

(43) Veröffentlichungstag der Anmeldung:
**25.03.2009 Patentblatt 2009/13**

(73) Patentinhaber: **Astrium GmbH**
**81663 München (DE)**

(72) Erfinder:
- **Martin, Sven, Dr.**
**81927 München (DE)**
- **Schlötzer, Susanne**
**81667 München (DE)**
- **Voith von Voithenberg, Michael**
**95512 Neudrossenfeld (DE)**

(56) Entgegenhaltungen:
**US-A1- 2003 142 295**    **US-A1- 2003 142 587**

- **LEMASTER E A ET AL: "Mars Navigation System Utilizes GPS" IEEE AEROSPACE AND ELECTRONIC SYSTEMS MAGAZINE, IEEE SERVICE CENTER, PISCATAWAY, NJ, US, Bd. 18, Nr. 4, 1. April 2003 (2003-04-01), Seiten 3-8, XP011092528 ISSN: 0885-8985**
- **LEMASTER E A ET AL: "Field demonstration of a mars navigation system utilizing GPS pseudolite transceivers" IEEE 2002 POSITION LOCATION AND NAVIGATION SYMPOSIUM. (PLANS 2002). PALM SPRINGS, CA, APRIL 15 - 18, 2002; [POSITION LOCATION AND NAVIGATION SYMPOSIUM], NEW YORK, NY : IEEE, US, 15. April 2002 (2002-04-15), Seiten 150-155, XP010590499 ISBN: 978-0-7803-7251-1**
- **SCHLÖTZER S ET AL: "Autonomous Navigation Environment with Self-Calibrating Transceivers" JOURNAL OF GLOBAL POSITIONING SYSTEMS, JGPS, VOL.6, NO.2, [Online] Dezember 2007 (2007-12), Seiten 149-157, XP002509185 ISBN: 978-0-7803-7251-1 Gefunden im Internet: URL: http://www.cpgps.org/journals.php> [gefunden am 2008-01-05]**

**Beschreibung**

Die Erfindung betrifft ein Verfahren zur automatischen Bestimmung der Position von Transceivern von Navigationssignalen gemäß Anspruch 1 und eine entsprechende Vorrichtung gemäß Anspruch 22.

Satellitensysteme zur weltweiten Navigation (GNSS; GNSS = Global Navigation Satellite System) werden zur Positionsbestimmung und Navigation auf der Erde und in der Luft eingesetzt. GNSS Systeme, wie beispielsweise das im Aufbau befindliche europäische Satellitennavigationssystem (im Folgenden auch als Galileo-System oder kurz Galileo bezeichnet) weisen ein, eine Mehrzahl von Satelliten oder Pseudolites umfassendes System, ein mit einer zentralen Berechnungsstation verbundenes erdfestes Empfangseinrichtungs-System sowie Nutzungssysteme auf, welche die von den Satelliten oder Pseudolites ausgesendeten Navigationssignale auswerten und nutzen.

Allgemein muss in einer Navigationsumgebung, insbesondere einem GNSS, die genaue Position der Sender, die Navigationssignale zum Empfangen durch Nutzungssysteme abstrahlen, in einem Koordinatensystem bekannt sein. Bei einem Satellitennavigationssystem ist die Kenntnis der Kepler-Bahnparameter der Satelliten für eine exakte Navigation von wesentlicher Bedeutung. Üblicherweise werden die genauen Positionen von terrestrischen GNSS, d.h. Pseudolite-Systemen, durch aufwendige Einmessung der Sender der Navigationssignale ermittelt. Es gibt bereits erste Ansätze, die Positionen der Navigationssender durch eine Selbstkalibrierung zu bestimmen.

Folgende Veröffentlichungen beschreiben die Selbstkalibrierung von Sendern von Navigationssignalen:

- "Self-Calibration of Pseudolite Arrays Using Self-Differencing Transceivers", E. A. LeMaster, S.M. Rock, Proceedings of the Institute of Navigation GPS-99 Conference, Nashville, TN, Sept. 1999, pp. 1549-1558;
- "Field Test Results for a Self-Calibrating Pseudolite Array", E. A. LeMaster, S.M. Rock, Proceedings of the Institute of Navigation GPS-2000 Conference, Salt Lake City, Sept. 2000, pp. 1046-1055;
- "An Improved Solution Algorithm for Self-Calibrating Pseudolite Arrays", E. A. LeMaster, S.M. Rock, Institute for Navigation National Technical Meeting, San Diego, CA. January 2002;
- "Field Demonstration of a Mars Navigation System Utilizing GPS Pseudolite Transceivers", E. A. LeMaster, S.M. Rock, Position, Location, and Navigation Symposium, Palm Springs, CA, April 2002; und
- "3-D Capabilities for GPS Transceiver Arrays", M. Matsuoka, E. A. LeMaster, S.M. Rock, Proceedings of the Institute of Navigation GPS-2002 Conference, Portland, OR, Sept. 2002, pp. 824-834
- "Mars Navigation System Utilizes GPS", LEMASTER E A ET AL, IEEE AEROSPACE AND ELECTRONIC SYSTEMS MAGAZINE, IEEE SERVICE CENTER, PISCATAWAY, NJ, US, Bd. 18, Nr. 4, 1. April 2003 (2003-04-01), Seiten 3-8.

Ein Nachteil der in diesen Veröffentlichungen beschriebenen Verfahren und Systeme besteht vor allem darin, dass ein Nutzungssystem als Transceiver ausgeführt sein und somit auch senden können muss, was allerdings nicht immer gewünscht ist, insbesondere bei militärischen Anwendungen. Befinden sich viele Nutzer in dem Navigationssystem, so ist es in Hinblick auf eine begrenzte Bandbreite vorteilhaft, wenn die einzelnen Nutzer keine Navigationssignale senden müssen. Ein weiterer Nachteil in der Ausführung des Nutzungssystems als Transceiver besteht darin, dass komplexe, gewichts- und kostenintensive Hardware für das Nutzungssystem erforderlich ist.

Aufgabe der vorliegenden Erfindung ist es daher, ein Verfahren und eine Vorrichtung zur automatischen Bestimmung der Position von Transceivern von Navigationssignalen zu schaffen, bei denen ein Nutzungssystem zur Selbstkalibrierung nicht als Transceiver ausgeführt sein muss.

Diese Aufgabe wird durch ein Verfahren zur automatischen Bestimmung der Position von Transceivern von Navigationssignalen mit den Merkmalen von Anspruch 1 und eine entsprechende Vorrichtung mit den Merkmalen von Anspruch 22 gelöst. Weitere Ausgestaltungen der Erfindung sind Gegenstand der abhängigen Ansprüche.

Ein wesentlicher Gedanke der Erfindung besteht darin, einen mehrstufigen Selbstkalibrierungsalgorithmus für Transceiver von Navigationssignalen unter Verwendung eines Nutzungssystems zur Positionsbestimmung der Transceiver zu verwenden. Im Wesentlichen erfolgt nach einem solchen Algorithmus die Selbstkalibrierung eines Netzwerks von Transceivern in drei Schritten:

1. Grobkalibrierung der Koordinaten der Transceiver;
2. Schätzung der Trajekotrie des Nutzungssystems; und
3. Feinkalibrierung der Koordinaten der Transceiver und der Trajektorie des Nutzungssystems auf Basis der Grobkalibrierung und der Schätzung der Trajektorie.

Durch die Selbstkalibrierung der Transceiver-Koordinaten kann eine wesentliche Zeitersparnis bei der Einrichtung einer lokalen Navigationsumgebung erzielt werden, z.B. für ein temporäres Landefeld oder zur Indoor Navigation in bestimmten Gebäuden. Weiterhin ist es nicht erforderlich, dass ein Nutzungssystem als Navigationssender ausgeführt ist, was für militärische Anwendungen zur Vermeidung der Detektion durch einen Gegner von wesentlicher Bedeutung ist. Die Verwendung von passiven Nutzungssystemen ermöglicht es angesichts begrenzter Bandbreiten, dass die Anzahl der Nutzer in der Navigationsumgebung nicht eingeschränkt werden muss. Schließlich ermöglicht die Erfindung kostengünstige Nutzer-Hardware mit geringem Gewicht.

Die Erfindung betrifft nun gemäß einer Ausführungsform ein Verfahren zur automatischen Bestimmung der Position von Transceivern von Navigationssignalen unter Verwendung eines Nutzungssystems für die Navigationssignale mit den folgenden Schritten:

a) Grobkalibrierung der Koordinaten der Transceiver;
b) Schätzung der Trajektorie des Nutzungssystems; und
c) Feinkalibrierung der Koordinaten der Transceiver und der Trajektorie des Nutzungssystems auf Basis der Grobkalibrierung und der Schätzung der Trajektorie.

In einer weiteren Ausführungsform der Erfindung wird durch die Grobkalibrierung die Entfernung zwischen zwei Transceivern ermittelt.

Für die Grobkalibrierung können nach einer weiteren Ausführungsform der Erfindung "Self-Differenced" Beobachtungsgleichungen verwendet werden. Dies ermöglicht die direkte Beobachtung der Entfernung zwischen zwei Transceivern.

Das Verfahren kann gemäß einer Ausführungsform der Erfindung ferner derart ausgebildet sein, dass, nachdem die Entfernungen zwischen allen Transceivern ermittelt wurden, die Koordinaten der Transceiver grob durch Triangulation der ermittelten Entfernungen zwischen den Transceivern bestimmt werden. Damit können die Transceiver in einem lokalen Koordinatensystem angeordnet werden.

Zur Bestimmung der Koordinaten der Transceiver wird gemäß einer weiteren Ausführungsform der Erfindung ein lokales Koordinatensystem verwendet und die günstigste Lage des Koordinatensystems in Bezug auf die Transceiver wird automatisch ausgesucht. Die Einführung eines lokalen Koordinatensystems ermöglicht die Einschränkung des Systems, da innerhalb eines Netzwerks von Transceivern nur relative Positionierungen zueinander möglich sind. Durch das automatische Aussuchen der günstigsten Lage des Koordinatensystems kann ferner die Erfolgsquote der Selbstkalibrierung auch bei schwierigen Geometrien und stark verrauschten Messungen verbessert werden.

In einer weiteren Ausführungsform der Erfindung wird nach Schritt a) die Startposition des Nutzungssystems vor Ausführung des Schrittes b) bestimmt.

Für eine erste Schätzung der Startposition des Nutzungssystems können nach einer Ausführungsform der Erfindung "Double-Differenced" Pseudoranges als Beobachtungsgröße verwendet werden. Dadurch werden die Uhrenfehler der Transceiver und des Nutzungssystems kompensiert, wenn die Sender für die Navigationssignale in den Transceivern nicht synchronisiert sind.

Weiterhin kann in einer Ausführungsform der Erfindung die Bestimmung der Startposition eines Nutzungssystems durch eine Gitternetzsuche basierend auf einer Minimierung von Messresiduen erfolgen.

Für jeden Gitternetzpunkt wird in einer weiteren Ausführungsform der Erfindung die Summe der quadrierten Messresiduen bestimmt und als Testgröße verwendet, um zwischen verschiedenen Testkandidaten der Gitternetzpunkte für die Startposition zu unterscheiden.

Nach einer Ausführungsform der Erfindung kann als erste Schätzung der Startposition derjenige Gitternetzpunkt ausgewählt werden, der die kleinste Summe der quadrierten Messresiduen liefert.

Gemäß einer weiteren Ausführungsform der Erfindung wird die Gitternetzsuche im ersten Schritt mit einem groben Gitternetz, das die gesamte Fläche der Navigationsumgebung abdeckt, und im nachfolgenden Schritt mit einem feinen Gitternetz, das um den im vorherigen Schritt ausgewählten Gitternetzpunkt aufgespannt wird, durchgeführt.

Nach einer weiteren Ausführungsform der Erfindung werden die Ausmaße des Testgebiets für die Bestimmung der Startposition des Nutzungssystems durch die grobkalibrierten Koordinaten der Transceiver bestimmt.

Die Schätzung der Trajektorie des Nutzungssystems kann gemäß einer weiteren Ausführungsform der Erfindung durch einen iterativen Least-Square Ansatz unter Ausnutzung einer geringen Dynamik des Nutzungssystems bei der Linearisierung von Beobachtungsgleichungen erfolgen.

Für die Feinkalibrierung der Koordinaten der Transceiver und der Trajektorie des Nutzungssystems werden nach einer Ausführungsform der Erfindung ausschließlich rauscharme Phasenmessungen der von den Transceivern ausgesandten Navigationssignale verwendet.

In einer weiteren Ausführungsform der Erfindung erfolgt die Feinkalibrierung der Koordinaten der Transceiver und der Trajektorie des Nutzungssystems durch einen iterativen Least Square Ansatz.

Für den iterativen Least Square Ansatz wird gemäß einer Ausführungsform eine Taylor-Reihenentwicklung der Beobachtungsgleichungen durchgeführt, die entweder nach dem linearen Term abgebrochen wird und anschließend ein Standard Iterative Least Square Verfahren für die Feinkalibrierung eingesetzt wird, oder die nach dem quadratischen Term abgebrochen wird und anschließend ein Quadratic Iterative Least Square Verfahren eingesetzt wird.

In einer weiteren Ausführungsform der Erfindung werden "Double-Differenced" Beobachtungsgleichungen für die Feinkalibrierung verwendet.

Schließlich werden gemäß einer Ausführungsform der Erfindung so viele Iterationen im Rahmen des iterativen Least Square Ansatzes durchgeführt, bis entweder das Konvergenzkriterium oder das Divergenzkriterium erfüllt oder die maximal zulässige Anzahl an Iterationen überschritten ist.

Weiterhin ist in einer Ausführungsform der Erfindung vorgesehen, dass die Feinkalibrierung unter Verwendung von zu den Ergebnissen der Grobkalibrierung variierenden Ergebnissen wiederholt wird.

Die Erfindung betrifft außerdem in einer Ausführungsform ein Computer-Programm zur Durchführung des Verfahrens nach der Erfindung.

Eine weitere Ausführungsform der Erfindung sieht ein Computer-Programm-Produkt vor, das einen maschinenlesbaren Programmträger umfasst, auf dem ein Computer-Programm gemäß der Erfindung in der Form von elektronisch und/oder optisch lesbaren Steuersignalen gespeichert ist.

Die Erfindung betrifft ferner gemäß einer Ausführungsform eine Vorrichtung zur automatischen Bestimmung der Position von Transceivern von Navigationssignalen unter Verwendung eines Nutzungssystems für die Navigationssignale, umfassend:

- erste Mittel zur Grobkalibrierung der Koordinaten der Transceiver;
- zweite Mittel zur Schätzung der Trajektorie des Nutzungssystems; und
- dritte Mittel zur Feinkalibrierung der Koordinaten der Transceiver und der Trajektorie des Nutzungssystems.

Die ersten Mittel sind gemäß einer Ausführungsform der Erfindung ausgebildet, ein Verfahren nach einem der Ansprüche 2 bis 5 auszuführen.

Die zweiten Mittel sind gemäß einer weiteren Ausführungsform der Erfindung ausgebildet, ein Verfahren nach Anspruch 13 auszuführen.

Die dritten Mittel sind gemäß einer weiteren Ausführungsform der Erfindung ausgebildet, ein Verfahren nach einem der Ansprüche 14 bis 19 auszuführen.

Nach einer Ausführungsform der Erfindung können ferner vierte Mittel zur Bestimmung der Startposition des Nutzungssystems vorgesehen sein, die ausgebildet sind, ein Verfahren nach einem der Ansprüche 6 bis 12 auszuführen.

Die ersten bis vierten Mittel können insbesondere durch einen Prozessor und einen Speicher, in den ein Programm nach der Erfindung zum Ausführen durch den Prozessor gespeichert ist, implementiert sein.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:

Fig. 1    den schematischen Ablauf eines Ausführungsbeispiels der Selbstkalibrierung eines Transceiver-Netzwerkes gemäß der Erfindung;

Fig. 2    das "Self-Differencing" zwischen zwei Transceivern;

Fig. 3    ein Ausführungsbeispiel für die tatsächliche Lage der TCs im Netzwerk gegenüber der Lage im lokalen Koordinatensystem nach der Selbstkalibrierung;

Fig. 4    das "Double-Differencing" im Transceiver-Netzwerk;

Fig. 5    ein Ausführungsbeispiel eines zweidimensionalen Testgebiets für die Gitternetz-basierte Suche; und

Fig. 6    Beispiele für die Summe der quadrierten Messresiduen als Funktion von der geschätzten Nutzerempfänger Startposition (links: grobes Gitterraster; rechts: feines Gitterraster).

Im Folgenden können gleiche und/oder funktional gleiche Elemente mit den gleichen Bezugszeichen versehen sein. Die im Folgenden angegebenen absoluten Werte und Maßangaben sind nur beispielhafte Werte und stellen keine Einschränkungen der Erfindung auf derartige Dimensionen dar.

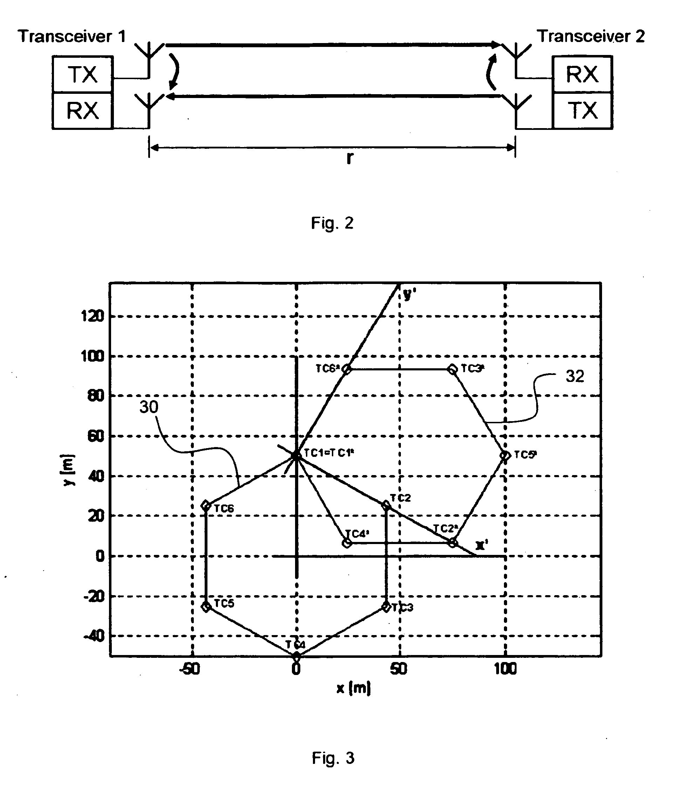

Ein Transceiver (TC) setzt sich aus einem GNSS Pseudolite und einem GNSS Empfänger zusammen. In der folgenden Algorithmenbeschreibung wird angenommen, dass zum Senden und Empfangen zwei getrennte Antennen von den Transceivern verwendet werden, wie es in Fig. 2 gezeigt ist. Die folgenden Systemanforderungen sollten für eine Selbstkalibrierung erfüllt sein, damit sich das Transceiver-Netzwerk erfolgreich kalibrieren kann:

a) Zweidimensionales TC-Netzwerk: ≥4TCs, die die Ebene aufspannen

b) Dreidimensionales TC-Netzwerk: ≥5TCs, die den Raum aufspannen

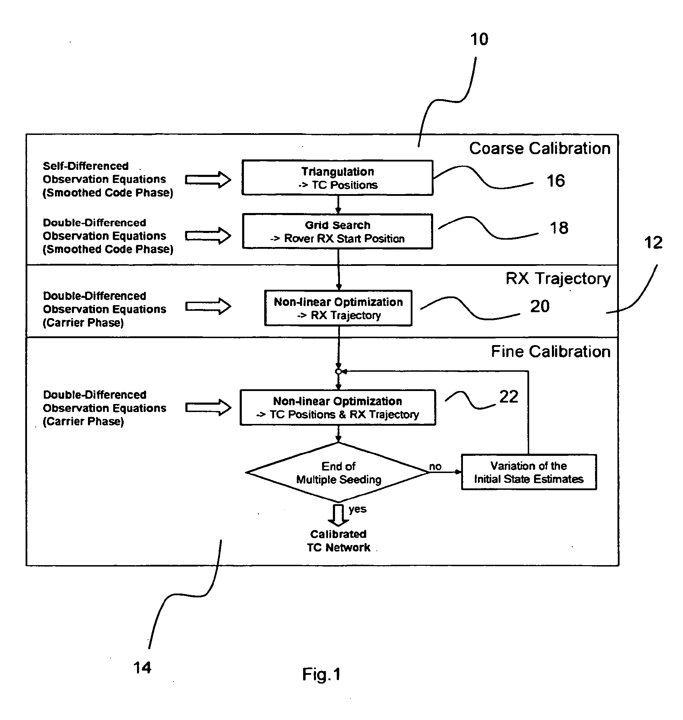

Neben den TCs sollte ein mobiler Nutzerempfänger für die Feinkalibrierung des Systems verfügbar sein. Der schematische Ablauf des Selbstkalibrierungsalgorithmus ist in Fig. 1 dargestellt.

Im Wesentlichen erfolgt die Selbstkalibrierung des TC-Netzwerkes in drei Schritten:

1) Grobkalibrierung
2) Schätzung der Trajektorie des Nutzungssystems bzw. Nutzerempfängers
3) Feinkalibrierung

Im Folgenden werden die einzelnen Schritte im Detail beschrieben.

1) Grobkalibrierung

In einem statischen Setup werden die TC-Koordinaten und die Nutzerempfängerkoordinaten grob kalibriert. Für die Grobkalibrierung der TC-Koordinaten werden "Self-Differenced" Beobachtungsgleichungen verwendet. Das Vorgehen für das "Self-Differencing" zwischen zwei Transceivern ist in Fig. 2 skizziert.

Durch das "Self-Differencing" von Pseudoranges zwischen zwei TCs wird die Entfernung r zwischen den beiden TCs direkt beobachtbar. Es wird dabei die Vereinfachung gemacht, dass die TX-Antenne und die RX-Antenne desselben TCs sich nahezu an demselben Ort befinden:

$$\nabla\Delta\rho_{i,j}(t) = \rho_i^j(t) - \rho_i^i(t) + \rho_j^i(t) - \rho_j^j(t) = 2 \cdot \left\| \begin{pmatrix} x_j \\ y_j \\ z_j \end{pmatrix} - \begin{pmatrix} x_i \\ y_i \\ z_i \end{pmatrix} \right\| + \nabla\Delta\nu_{\rho\_i,j}(t)$$

## Gleichung (1)

mit

$\rho$:   Pseudorange-Messung
$\nu_\rho$:   Pseudorange-Rauschen auf Grund aller Fehlerquellen (Empfängerrauschen, Mehrwegeausbreitung)

Die Indizes i und j stehen für den i-ten bzw. j-ten TC. Nach dem "Self-Differencing" wird die doppelte Entfernung r zwischen den beiden TCs erhalten.

$$r_{i,j} \approx \frac{\nabla\Delta\rho_{i,j}(t_0)}{2}$$

## Gleichung (2)

Nachdem die Entfernungen zwischen allen TCs im Netzwerk bekannt sind, können die TC-Koordinaten grob durch Triangulation bestimmt werden. Da innerhalb des TC-Netzwerkes nur relative Positionierung zueinander möglich ist, wird das System durch Einführung eines Koordinatensystems eingeschränkt. Für zweidimensionale Systeme werden drei zusätzliche Einschränkungen und für dreidimensionale Systeme sechs zusätzliche Einschränkungen eingeführt auf Grund der Freiheitsgrade des Systems hinsichtlich Translation und Rotation. Um die nachfolgenden beispielhaften Betrachtungen zu vereinfachen, werden den lokalen TC-Koordinaten in dieser Beschreibung die folgenden Einschränkungen auferlegt:

1. TC1* soll im Koordinatenursprung des Koordinatensystems zu liegen kommen (x1*=0, y1*=0, z1*=0)
2. TC2* soll entlang der positiven x-Achse des Koordinatensystems zu liegen kommen (y2*=0, z2*=0)
3. TC3* soll in der xy-Ebene liegen und einen positiven y-Wert aufweisen (y3*>0, z3*=0)
Bei einem dreidimensionalen TC-Netzwerk soll zusätzlich gelten:
4. TC4* soll den Raum aufspannen und einen positiven z-Wert aufweisen (z4*>0)

Der Algorithmus kann so konfiguriert werden, dass er sich automatisch die günstigste Lage für das lokale kartesische Koordinatensystem aussucht. Damit wird die Erfolgsquote der Selbstkalibrierung auch bei schwierigen Geometrien, beispielsweise wenn drei TCs nahezu kollinear aufgestellt sind, und stark verrauschten Messungen verbessert, vorausgesetzt es befinden sich redundante TCs im Netzwerk.

Bei zweidimensionalen TC-Netzwerken kann wie folgt vorgegangen werden: Wenn n die Anzahl der TCs im Netzwerk ist, dann können $\binom{n}{3}$ Referenz-Dreiecke gebildet werden. Das TC-Dreieck, das einem gleichseitigen Dreieck am ähnlichsten ist, wird als Referenz-Dreieck zum Aufspannen des Koordinatensystems ausgewählt:

$$\min \left[ \sum_{n=1}^{3} \left| \alpha_n - \frac{\pi}{3} \right| \right]$$

Gleichung (3)

mit

$\alpha_1 = \angle(TC2, TC1, TC3)$
$\alpha_2 = \angle(TC3, TC2, TC1)$
$\alpha_3 = \angle(TC2, TC3, TC1)$

Bei dreidimensionalen TC-Netzwerken kann wie folgt vorgegangen werden: 3D Positionierung mit $\geq$4TCs ist nur möglich, wenn mindestens 1 TC ausreichend aus der Ebene herauskommt. Wenn n die Anzahl der TCs im Netzwerk ist, dann können $\binom{n}{4}$ Referenz-Tetraeder gebildet werden. Der TC-Tetraeder mit dem größten Volumen wird als Referenz-Tetraeder ausgewählt, insofern sich redundante TCs im Netzwerk befinden:

$$\max \left[ abs \left( \begin{vmatrix} x_1 & y_1 & z_1 & 1 \\ x_2 & y_2 & z_2 & 1 \\ x_3 & y_3 & z_3 & 1 \\ x_4 & y_4 & z_4 & 1 \end{vmatrix} \right) \right]$$

Gleichung (4)

mit
$x_1 = y_1 = z_1 = y_2 = z_2 = z_3 = 0$

Die Vorgehensweise zum Aufspannen des lokalen kartesischen Koordinatensystems für ein zweidimensionales TC-Netzwerk ist in Fig. 3 dargestellt. Hierbei ist die tatsächliche Lage (Bezugszeichen 30) der TCs im Netzwerk gegenüber der Lage (Bezugszeichen 32) im lokalen Koordinatensystem nach der Selbstkalibrierung. Es erfolgt auch eine Umsortierung der TC-Indizes. So geht z.B. TC1 in TC1* über, wohingegen TC3 in TC2* und TC5 in TC3* übergehen.

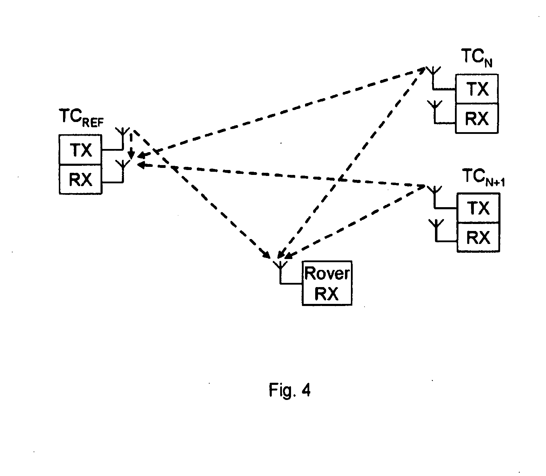

Nachdem die TC-Standorte durch Triangulation grob kalibriert sind, können die Koordinaten des Nutzerempfängers (in Fig. 4 mit "Rover RX" bezeichnet) bestimmt werden. Der Nutzerempfänger kann sich innerhalb oder auch außerhalb des durch die TCs aufgespannten Polygons befinden.

Für die erste Schätzung der Startposition des Nutzerempfängers werden "Double-Differenced" Pseudoranges als Beobachtungsgrößen verwendet:

Die Verwendung von "Double-Differences" bewirkt, dass mögliche Uhrenfehler herausfallen bzw. im Wesentlichen kompensiert werden, wenn die Sender im TC-Netzwerk nicht synchronisiert sind. Da die Entfernung zwischen Nutzer und den TCs nicht direkt beobachtbar ist, wird eine Gitternetzsuche durchgeführt, wobei nach der Nutzerposition gesucht wird, für die sich ein Minimum der Messresiduen ergibt. Die "Double-Differenced" Beobachtungsgleichungen im TC-Netzwerk lassen sich gemäß Fig. 4 wie folgt formulieren:

$$\nabla \Delta \rho_{Ro,PLR_{REF}}^{PLT_{REF},PLT_N} = \rho_{Ro}^{PLT_N} - \rho_{PLR_{REF}}^{PLT_N} - \rho_{Ro}^{PLT_{REF}} + \rho_{PLR_{REF}}^{PLT_{REF}}$$

Gleichung (5)

Die Indizes haben die folgende Bedeutung:

PLT Pseudolite Transmitter
PLR Pseudolite Receiver
Ro Rover Empfänger

Der Empfänger von TC1* wird immer als Referenzempfänger herangezogen und der Sender von TC1* wird immer als Referenzsender bei der Differenzbildung herangezogen. Neben den gemessenen "Double-Differenced" Beobachtungsgleichungen können auch theoretische "Double-Differences" für jede Nutzerposition auf dem Gitternetz berechnet werden:

$$r_{Ro0}^{PLT} = \sqrt{\left(x^{PLT} - x_{Ro0}\right)^2 + \left(y^{PLT} - y_{Ro0}\right)^2 + \left(z^{PLT} - z_{Ro0}\right)^2}$$

Gleichung (6)

$$\nabla\Delta\hat{\rho}_{Ro0,PLR_{REF}}^{PLT_{REF},PLT_N} = r_{Ro0}^{PLT_N} - r_{PLR_{REF}}^{PLT_N} - r_{Ro0}^{PLT_{REF}}.$$

Gleichung (7)

mit

$X_{Ro0}, Y_{Ro0}, Z_{Ro0}$     x-, y- und z-Koordinate eines Kandidaten für die Nutzerstartposition (Gitternetzpunkt)
$x^{PLT}, y^{PLT}, z^{PLT}$     x-, y- und z-Koordinate der grob kalibrierten Sendestationen

Da angenommen wird, dass die RX-Antenne und die TX-Antenne von TC1* sich am selben Ort befinden, erscheint die Entfernung $r_{PLR_{REF}}^{PLT_{REF}}$ nicht in Gleichung 7. Im nächsten Schritt wird die Differenz aus den gemessenen "Double-Differenced" Beobachtungsgleichungen und den erwarteten "Double-Differenced" Beobachtungsgleichungen für einen bestimmten Gitternetzpunkt ermittelt:

$$dr(N - REF) = \nabla\Delta\rho_{Ro0,PLR_{REF}}^{PLT_{REF},PLT_N} - \nabla\Delta\hat{\rho}_{Ro0,PLR_{REF}}^{PLT_{REF},PLT_N}$$

Gleichung (8)

, mit N=2...Anzahl der TCs im Netzwerk.
Das ergibt insgesamt die Anzahl der TCs im Netzwerk minus 1 Residuen dr für einen einzigen Testkandidaten Ro0 für die Nutzerstartposition. Die Summe der quadrierten Messresiduen (S) wird für jeden Gitternetzpunkt bestimmt und als Testgröße verwendet, um zwischen verschiedenen Testkandidaten für die Nutzerstartposition zu unterscheiden:

$$S = \sum_{i=1}^{N-1} dr(i)^2$$

Gleichung (9)

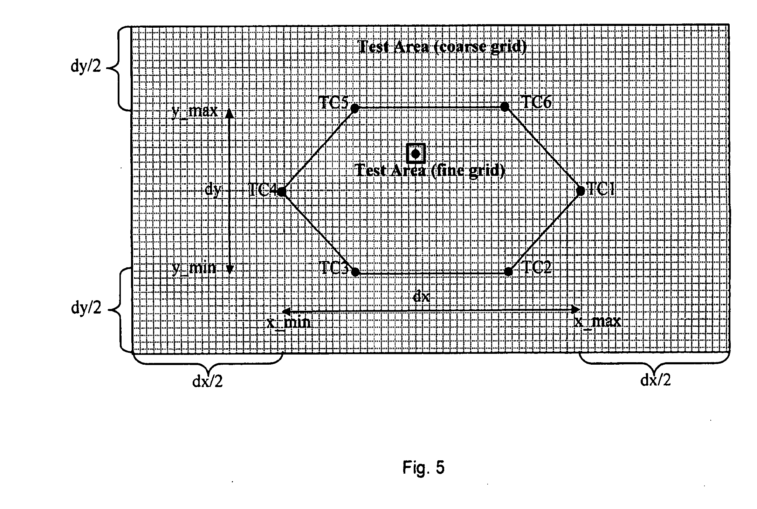

Derjenige Gitternetzpunkt, der die kleinste Summe der quadrierten Messresiduen liefert, wird als erste Schätzung für die Nutzerempfängerstartposition herangezogen.
Die Gitternetzsuche wird insgesamt zweimal durchgeführt: zunächst für ein grobes Gitternetz, das die gesamte Fläche der Navigationsumgebung abdeckt, dann für ein feines Gitternetz, das um den vorangehend selektierten Kandidaten für das grobe Gitternetz aufgespannt wird. Die Ausmaße des Testgebiets, in dem nach der Nutzerempfängerstartposition gesucht werden soll, wird durch die grob kalibrierten TC-Koordinaten bestimmt (vgl. Fig. 5).

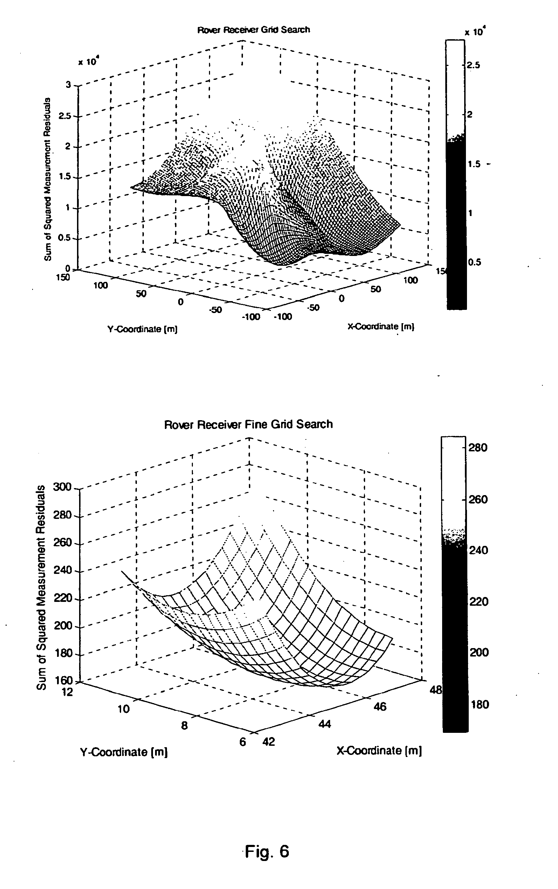

Wenn ein dreidimensionales TC-Netzwerk selbstkalibriert werden soll, wird das Gitternetz entsprechend räumlich anstatt von eben aufgespannt. Das Gitternetz setzt sich dann aus einer Vielzahl von einzelnen Würfeln zusammen. Fig. 6 illustriert, wie das globale Minimum der quadrierten Messresiduen durch die Gitternetzsuche gefunden werden kann:

2) Schätzung der Trajektorie des Nutzungssystems bzw. Nutzerempfängers

Damit eine Feinkalibrierung des TC-Netzwerkes durchgeführt werden kann, ist es erforderlich, dass sich der Nutzerempfänger im Operationsgebiet bewegt und die Empfängerdaten von dem Referenz-TC und dem Nutzerempfänger während der Trajektorie aufgezeichnet werden. Um eine Phasenlösung für die Feinkalibrierung berechnen zu können, werden die Mehrdeutigkeiten der Phasenmessungen erfolgreich gelöst. Solange keine Phasensprünge auftreten, bleiben die Mehrdeutigkeiten während der Nutzertrajektorie konstant. Zu Beginn der Nutzertrajektorie ist das Gleichungssystem, das auf der Verwendung von Phasenmessungen beruht, unterbestimmt. Erst wenn mehrere Samplezeitpunkte während der Nutzertrajektorie für die Berechnung im Post-Processing vorliegen, kann das Gleichungssystem gelöst werden.

Für die erste Schätzung der Nutzerempfänger-Trajektorie werden "Double-Differenced" Phasenmessungen herangezogen:

$$\nabla\Delta\phi_{Ro,PLR_{Ref}}^{PLT_{REF},PLT_N}(t) = r_{Ro}^{PLT_N}(t) - r_{PLR_{REF}}^{PLT_N} - r_{Ro}^{PLT_{REF}}(t) + r_{PLR_{REF}}^{PLT_{REF}} + \nabla\Delta N_{Ro,RLR_{REF}}^{PLT_{REF},PLT_N}\cdot\lambda + \nabla\Delta v_{\phi\_Ro,PLR_{REF}}^{PLT_{REF},PLT_N}(t)$$

Gleichung (10)

mit

Φ:     Phasenmessung (Einheit: Meter)
r:     Schrägentfernung
N:     Mehrdeutigkeiten (Einheit: Cycles)
λ:     Wellenlänge
$v_\Phi$:     Phasen-Rauschen auf Grund aller Fehlerquellen (Empfängerrauschen, Mehrwegeausbreitung)

Eine Schätzung sämtlicher Positionen, die der Nutzer während seiner Trajektorie einnimmt, erfolgt durch eine nichtlineare iterative Minimierung der quadrierten Messresiduen. Es erfolgt eine Linearisierung der Phasenmessungen nach den Nutzerempfängerkoordinaten. Die Mehrdeutigkeiten zu Beginn der Trajektorie werden hier noch als bekannt angesetzt. Für die Linearisierung während der Nutzertrajektorie wird angenommen, dass sich der Nutzerempfänger zwischen zwei aufeinanderfolgenden Beobachtungsepochen nicht bewegt. Damit kann jeweils die vorangegangene Nutzerposition als Startwert für die nachfolgende Linearisierung herangezogen werden. Ein Standard Iterative Least Square (ILS) Verfahren wird eingesetzt, um die Nutzerposition für die jeweilige Samplezeitepoche zu bestimmen:

Anwendung des Gauß-Newton Verfahrens für die Minimierung der quadrierten Messresiduen:

$$\underline{x}_{i+1} = \underline{x}_i - \left(J^T\cdot P\cdot J\right)^{-1}\cdot J^T\cdot P\cdot\underline{r}$$

Gleichung (11)

mit

$\underline{x}$     unbekannte Systemzustände
J     Jacobi Matrix
$\underline{r}$     Messresiduen-Vektor
P     Korrelationsmatrix

Der Index i steht für die i-te Iteration.

3) Feinkalibrierung

Die Feinkalibrierung des TC-Netzwerkes beruht in hier beschriebenen Ausführungsbeispiel im Gegensatz zu der Grobkalibrierung ausschließlich auf der Verwendung von rauscharmen Phasenmessungen. Die Pseudorange Messungen, die für die Grobkalibrierung verwendet werden, haben den Vorteil, dass sie keine Mehrdeutigkeiten aufweisen. Dafür sind die Pseudorange Messungen jedoch viel stärker rauschbehaftet, was sich in der Genauigkeit der Selbstkalibrierung widerspiegelt. Da die Genauigkeit der Selbstkalibrierung im Zentimeterbereich liegen soll, wird noch eine anschließende Feinkalibrierung nach der Grobkalibrierung durchgeführt. Die bisher gewonnenen Ergebnisse aus der Grobkalibrierung und die Schätzung der Nutzertrajektorie werden als Ausgangspunkt für die Linearisierung verwendet, die im Zuge der Feinkalibrierung stattfindet. Die zeitinvarianten Mehrdeutigkeiten der Phasenmessungen werden hier neben den zeitinvarianten TC-Koordinaten und den zeitabhängigen Nutzerkoordinaten auch als unbekannt angesetzt. Es ergibt sich ein nichtlineares Optimierungsproblem. Für die Feinkalibrierung des Systems kann anstatt von einem Standard-ILS Verfahren auch ein Quadratic Iterative Least Square (QILS) Verfahren angewendet werden. Bei der Linearisierung nach den unbekannten Systemparametern wird dann erst nach dem quadratischen Term abgebrochen. Die in Gleichung 10 dargestellte Phasenmessung muss nach den TC-Koordinaten, den Nutzerkoordinaten zum Samplezeitpunkt $t_0$ und den anfänglichen Mehrdeutigkeiten linearisiert werden. Der Abbruch bei der Linearisierung erst nach dem quadratischen Term hat den Vorteil, dass bei schlechten Startnäherungen durch die Grobkalibrierung des Systems die nichtlineare Optimierung dahingehend verbessert wird, dass sie dennoch konvergiert. Der verwendete QILS-Algorithmus kann dem Algorithmus entsprechen, der in LeMaster (1999) dargestellt ist. Jedoch werden in dem hier dargestellten Ansatz im Gegensatz zu dem Ansatz von LeMaster "Double-Differenced" Beobachtungsgleichungen verwendet anstatt von "Self-Differenced" Beobachtungsgleichungen, da der Nutzer als reiner Empfänger und nicht als Transceiver ausgeführt ist. Damit verändert sich der Term, in dem gesuchte Systemgrößen in nichtlinearer Form auftreten, zu:

$$r_{Ro}^{PLT_N}(t) - r_{PLR_{REF}}^{PLT_N} - r_{Ro}^{PLT_{REF}}(t) + r_{PLR_{REF}}^{PLT_{REF}} = \sqrt{\left(x^{PLT_N} - x_{Ro}(t)\right)^2 + \left(y^{PLT_N} - y_{Ro}(t)\right)^2 + \left(z^{PLT_N} - z_{Ro}(t)\right)^2} - \sqrt{\left(x^{PLT_N}\right)^2 + \left(y^{PLT_N}\right)^2 + \left(z^{PLT_N}\right)^2} - \sqrt{\left(x_{Ro}(t)\right)^2 + \left(y_{Ro}(t)\right)^2 + \left(z_{Ro}(t)\right)^2}$$

## Gleichung (12)

Wie bereits in den vorherigen Ansätzen wird auch hier wieder angenommen, dass sich die TX- und RX-Antenne desselben TCs an demselben Ort befinden. In Gleichung 12 ist bereits berücksichtigt, dass sich der Referenz-TC per Definition im Koordinatenursprung (0|0|0) befinden soll.

Die Messresiduen der "Double-Differenced" Phasenmessungen können näherungsweise in einen linearen Term und in einen quadratischen Term aufgeteilt werden:

$$\delta\nabla\Delta\underline{\phi}_k = J_k \cdot \delta\underline{x}_k + Z(\delta\underline{x}_k) \cdot H_k \cdot \delta\underline{x}_k$$

## Gleichung (13)

, wobei H die Hesse-Matrix ist und k als Schleifenindex für die jeweilige Iteration verwendet wird.

Das in Gleichung 13 dargestellte nichtlineare Gleichungssystem kann näherungsweise in zwei getrennten Schritten gelöst werden. Im ersten Schritt wird eine Näherung für Z ermittelt, indem vorerst $\delta\underline{x}'_k$ durch ein Standard ILS Verfahren (siehe Gauß-Newton Verfahren) bestimmt wird:

$$\delta\underline{x}'_k = \left(J_k^T \cdot P \cdot J_k\right)^{-1} \cdot J_k^T \cdot P \cdot \delta\nabla\Delta\underline{\phi}_k$$

## Gleichung (14)

Die nichtlineare Gleichung 13 kann nun durch Gleichung 15 genähert werden:

$$\delta\nabla\Delta\underline{\phi}_k = K_k \cdot \delta\underline{x}_k$$

*mit*

$$K_k = J_k + Z(\delta \underline{x}_k^{'}) \cdot H_k$$

## Gleichung (15)

Im zweiten Schritt kann der Korrekturterm $\delta\underline{x}_k$ für die unbekannten Systemzustände wie folgt berechnet werden:

$$\delta \underline{x}_k = \left(K_k^T \cdot P \cdot K_k\right)^{-1} \cdot K_k^T \cdot P \cdot \delta\nabla\Delta\underline{\phi}_k$$

## Gleichung (16)

Es werden so viele Iterationen des QILS-Verfahrens durchgeführt, bis entweder das Konvergenzkriterium oder das Divergenzkriterium erfüllt ist bzw. die maximal zulässige Anzahl an Iterationen überschritten wurde.

Für den Fall, dass sich schlechte Startnäherungen für die unbekannten Systemgrößen aus der Grobkalibrierung ergeben, ist es sinnvoll, die Feinkalibrierung unter Verwendung von zu den Grobkalibrierungsergebnissen variierenden Startnäherungen zu wiederholen. Insgesamt wird diejenige Systemlösung akzeptiert, die zu der kleinsten Summe der quadrierten Messresiduen führt.

**Bezugszeichen**

| | |
|---|---|
| 10 | Grobkalibrierung der Koordinaten der Transceiver |
| 12 | Schätzung der Trajektorie des Nutzungssystems |
| 14 | Feinkalibrierung der Koordinaten der Transceiver und der Trajektorie des Nutzungssystems auf Basis der Grobkalibrierung und der Schätzung der Trajektorie |
| 16 | Triangulation |
| 18 | Gitternetzsuche |
| 20 | iterativer Least-Square Ansatz |
| 22 | iterativer Least Square Ansatz |
| 30 | tatsächliche Lage der TCs im Netzwerk |
| 32 | Lage im lokalen Koordinatensystem nach der Selbstkalibrierung |

**Patentansprüche**

1.  Verfahren zur automatischen Bestimmung der Position von Transceivern von Navigationssignalen unter Verwendung eines Nutzungssystems für die Navigationssignale mit den folgenden Schritten:

    a) Grobkalibrierung (10) der Koordinaten der Transceiver;
    b) Schätzung (12) der Trajektorie des Nutzungssystems; und
    c) Feinkalibrierung (14) der Koordinaten der Transceiver und der Trajektorie des Nutzungssystems auf Basis der Grobkalibrierung und der Schätzung der Trajektorie,

    **dadurch gekennzeichnet, dass**
    für die Feinkalibrierung "Double-Differenced" Beobachtungsgleichungen verwendet werden.

2.  Verfahren nach Anspruch 1, **dadurch gekennzeichnet, dass** im Rahmen der Grobkalibrierung die Entfernung zwischen zwei Transceivern ermittelt wird.

3.  Verfahren nach Anspruch 2, **dadurch gekennzeichnet, dass** für die Grobkalibrierung "Self-Differenced" Beobachtungsgleichungen verwendet werden.

**4.** Verfahren nach Anspruch 2 oder 3, **dadurch gekennzeichnet, dass** nachdem die Entfernungen zwischen allen Transceivern ermittelt wurden, die Koordinaten der Transceiver grob durch Triangulation (16) der ermittelten Entfernungen zwischen den Transceivern bestimmt werden.

**5.** Verfahren nach Anspruch 4, **dadurch gekennzeichnet, dass** zur Bestimmung der Koordinaten der Transceiver ein lokales Koordinatensystem verwendet wird und automatisch die günstigste Lage des Koordinatensystems in Bezug auf die Transceiver ausgesucht wird.

**6.** Verfahren nach einem der vorhergehenden Ansprüche, **dadurch gekennzeichnet, dass** nach Schritt a) die Startposition des Nutzungssystems vor Ausführung des Schrittes b) bestimmt wird.

**7.** Verfahren nach Anspruch 6, **dadurch gekennzeichnet, dass** für eine erste Schätzung der Startposition des Nutzungssystems "Double-Differenced" Pseudoranges als Beobachtungsgröße verwendet werden.

**8.** Verfahren nach Anspruch 6 oder 7, **dadurch gekennzeichnet, dass** die Bestimmung der Startposition eines Nutzungssystems durch eine Gitternetzsuche (18) basierend auf einer Minimierung von Messresiduen erfolgt.

**9.** Verfahren nach Anspruch 8, **dadurch gekennzeichnet, dass** für jeden Gitternetzpunkt die Summe der quadrierten Messresiduen bestimmt und als Testgröße verwendet wird, um zwischen verschiedenen Testkandidaten der Gitternetzpunkte für die Startposition zu unterscheiden.

**10.** Verfahren nach Anspruch 9, **dadurch gekennzeichnet, dass** als erste Schätzung der Startposition derjenige Gitternetzpunkt ausgewählt wird, der die kleinste Summe der quadrierten Messresiduen liefert.

**11.** Verfahren nach Anspruch 10, **dadurch gekennzeichnet, dass** die Gitternetzsuche mit einem groben Gitternetz, das die gesamte Fläche der Navigationsumgebung abdeckt, und anschließend mit einem feinen Gitternetz, das um den ausgewählten Gitternetzpunkt aufgespannt wird, durchgeführt wird.

**12.** Verfahren nach einem der Ansprüche 6 bis 11, **dadurch gekennzeichnet, dass** die Ausmaße des Testgebiets für die Bestimmung der Startposition des Nutzungssystems durch die grobkalibrierten Koordinaten der Transceiver bestimmt werden.

**13.** Verfahren nach einem der vorhergehenden Ansprüche, **dadurch gekennzeichnet, dass** die Schätzung der Trajektorie des Nutzungssystems durch einen iterativen Least-Square Ansatz (20) unter Ausnutzung einer geringen Dynamik des Nutzungssystems bei der Linearisierung von Beobachtungsgleichungen erfolgt.

**14.** Verfahren nach einem der vorhergehenden Ansprüche, **dadurch gekennzeichnet, dass** für die Feinkalibrierung (14) der Koordinaten der Transceiver und der Trajektorie des Nutzungssystems ausschließlich rauscharme Phasenmessungen der von den Transceivern ausgesandten Navigationssignale verwendet werden.

**15.** Vorrichtung zur automatischen Bestimmung der Position von Transceivern von Navigationssignalen unter Verwendung eines Nutzungssystems für die Navigationssignale, umfassend:

a) erste Mittel (10) zur Grobkalibrierung der Koordinaten der Transceiver;
b) zweite Mittel (12) zur Schätzung der Trajektorie des Nutzungssystems; und
c) dritte Mittel (14) zur Feinkalibrierung der Koordinaten der Transceiver und der Trajektorie des Nutzungssystems auf Basis der Grobkalibrierung und der Schätzung der Trajektorie,

**dadurch gekennzeichnet, dass** die dritten Mittel (14) für die Feinkalibrierung "Double-Differenced" Beobachtungsgleichungen verwenden.

**Claims**

**1.** Method for automatically determining the position of transceivers of navigation signals by using a utilization system for the navigation signals, having the following steps:

a) coarse calibrating (10) the coordinates of the transceivers;

b) estimating (12) the trajectory of the utilization system; and

c) finely calibrating (14) the coordinates of the transceivers and of the trajectory of the utilization system on the basis of the coarse calibration and the estimate of the trajectory,

**characterized in that**
double-differenced observation equations are used for the fine calibration.

2. Method according to Claim 1, **characterized in that** the distance between two transceivers is determined in the course of the coarse calibration.

3. Method according to Claim 2, **characterized in that** self-differenced observation equations are used for the coarse calibration.

4. Method according to Claim 2 or 3, **characterized in that**, after the distances between all the transceivers have been determined, the coordinates of the transceivers are approximately determined by triangulation (16) of the determined distances between the transceivers.

5. Method according to Claim 4, **characterized in that** a local coordinate system is used to determine the coordinates of the transceivers, and the optimal position of the coordinate system with reference to the transceivers is sought automatically.

6. Method according to one of the preceding claims, **characterized in that** after step a) the starting position of the utilization system is determined before execution of step b).

7. Method according to Claim 6, **characterized in that** double-differenced pseudoranges are used as observation variable for a first estimate of the starting position of the utilization system.

8. Method according to Claim 6 or 7, **characterized in that** the determination of the starting position of a utilization system is performed by a grid network search (18) based on a minimization of measurement residuals.

9. Method according to Claim 8, **characterized in that** the sum of the squared measurement residuals is determined for each grid network point and used as test variable in order to distinguish between different test candidates of the grid network points for the starting position.

10. Method according to Claim 9, **characterized in that** the grid network point which yields the smallest sum of the squared measurement residuals is selected as first estimate of the starting position.

11. Method according to Claim 10, **characterized in that** the grid network search is carried out with a coarse grid network which covers the total area of the navigation environment, and subsequently with a fine grid network which is situated around the selected grid network point.

12. Method according to one of Claims 6 to 11, **characterized in that** the dimensions of the test area for determining the starting position of the utilization system are determined by the coarsely calibrated coordinates of the transceivers.

13. Method according to one of the preceding claims, **characterized in that** the estimate of the trajectory of the utilization system is performed by an iterative least square approach (20) employing low dynamics of the utilization system with the linearization of observation equations.

14. Method according to one of the preceding claims, **characterized in that** the fine calibration (14) of the coordinates of the transceivers and of the trajectory of the utilization system makes use exclusively of low-noise phase measurements of the navigation signals emitted by the transceivers.

15. Device for automatically determining the position of transceivers of navigation signals by using a utilization system for the navigation signals, comprising:

a) first means (10) for coarsely calibrating the coordinates of the transceivers;

b) second means (12) for estimating the trajectory of the utilization system; and

c) third means (14) for finely calibrating the coordinates of the transceivers and of the trajectory of the utilization system on the basis of the coarse calibration and the estimation of the trajectory,

**characterized in that**
the third means (14) uses double-differenced observation equations for the fine calibration.

**Revendications**

1.  Procédé de détermination automatique de la position d'émetteurs/récepteurs de signaux de navigation en utilisant un système utilisateur des signaux de navigation, comprenant les étapes suivantes :

    a) calibrage approximatif (10) des coordonnées de l'émetteur/récepteur ;
    b) estimation (12) de la trajectoire du système utilisateur ; et
    c) calibrage précis (14) des coordonnées de l'émetteur/récepteur et de la trajectoire du système utilisateur en se basant sur le calibrage approximatif et l'estimation de la trajectoire,

    **caractérisé en ce que** des équations d'observation « à double différence » sont utilisées pour le calibrage précis.

2.  Procédé selon la revendication 1, **caractérisé en ce que** la distance entre deux émetteurs/récepteurs est déterminée dans le cadre du calibrage approximatif.

3.  Procédé selon la revendication 2, **caractérisé en ce que** des équations d'observation « à différence propre » sont utilisées pour le calibrage approximatif.

4.  Procédé selon la revendication 2 ou 3, **caractérisé en ce qu'**après avoir déterminé les distances entre tous les émetteurs/récepteurs, les coordonnées de l'émetteur/récepteur sont déterminées de manière approximative par triangulation (16) des distances déterminées entre les émetteurs/récepteurs.

5.  Procédé selon la revendication 4, **caractérisé en ce qu'**un système de coordonnées local est utilisé pour déterminer les coordonnées de l'émetteur/récepteur et la position la plus favorable du système de coordonnées par rapport à l'émetteur/récepteur est automatiquement recherchée.

6.  Procédé selon l'une des revendications précédentes, **caractérisé en ce qu'**après l'étape a), la position de départ du système utilisateur est déterminée avant d'exécuter l'étape b).

7.  Procédé selon la revendication 6, **caractérisé en ce que** des pseudo-distances « à double différence » sont utilisées comme grandeur d'observation pour une première estimation de la position de départ du système utilisateur.

8.  Procédé selon la revendication 6 ou 7, **caractérisé en ce que** la détermination de la position de départ d'un système utilisateur est réalisée par une recherche par réseau de quadrillage (18) en se basant sur une minimisation des résidus de mesure.

9.  Procédé selon la revendication 8, **caractérisé en ce que** pour chaque point du réseau de quadrillage, la somme des résidus de mesure élevés au carré est déterminée et utilisée comme grandeur de test afin de différencier les différents candidats de test des points du réseau de quadrillage pour la position de départ.

10. Procédé selon la revendication 9, **caractérisé en ce que** le point du réseau de quadrillage qui fournit la plus petite somme des résidus de mesure élevés au carré est sélectionné comme première estimation de la position de départ.

11. Procédé selon la revendication 10, **caractérisé en ce que** la recherche par réseau de quadrillage est effectuée avec un réseau de quadrillage grossier qui couvre la totalité de la surface de l'environnement de navigation et ensuite avec un réseau de quadrillage fin qui s'étend autour du point sélectionné du réseau de quadrillage.

12. Procédé selon l'une des revendications 6 à 11, **caractérisé en ce que** les dimensions de la zone de test pour la détermination de la position de départ du système utilisateur sont déterminées par les coordonnées calibrées approximativement de l'émetteur/récepteur.

**13.** Procédé selon l'une des revendications précédentes, **caractérisé en ce que** l'estimation de la trajectoire du système utilisateur est effectuée par une approche itérative des moindres carrés (20) en utilisant une dynamique plus faible du système utilisateur lors de la linéarisation des équations d'observation.

**14.** Procédé selon l'une des revendications précédentes, **caractérisé en ce que** seules des mesures de phase à faible bruit des signaux de navigation émis par les émetteurs/récepteurs sont utilisés pour le calibrage précis (14) des coordonnées de l'émetteur/récepteur et de la trajectoire du système utilisateur.

**15.** Dispositif de détermination automatique de la position d'émetteurs/récepteurs de signaux de navigation en utilisant un système utilisateur des signaux de navigation, comprenant :

a) des premiers moyens (10) pour calibrer approximativement les coordonnées de l'émetteur/récepteur ;
b) des deuxièmes moyens (12) pour estimer la trajectoire du système utilisateur ; et
c) des troisièmes moyens (14) pour calibrer précisément les coordonnées de l'émetteur/récepteur et la trajectoire du système utilisateur en se basant sur le calibrage approximatif et l'estimation de la trajectoire,

**caractérisé en ce que** les troisièmes moyens (14) pour calibrer précisément utilisent des équations d'observation « à double différence ».

10

## Coarse Calibration

Self-Differenced
Observation Equations
(Smoothed Code Phase)

→ Triangulation
-> TC Positions

16

Double-Differenced
Observation Equations
(Smoothed Code Phase)

→ Grid Search
-> Rover RX Start Position

18

12

## RX Trajectory

Double-Differenced
Observation Equations
(Carrier Phase)

→ Non-linear Optimization
-> RX Trajectory

20

## Fine Calibration

Double-Differenced
Observation Equations
(Carrier Phase)

→ Non-linear Optimization
-> TC Positions & RX Trajectory

22

End of
Multiple Seeding

no → Variation of the
Initial State Estimates

yes

Calibrated
TC Network

14

Fig.1

Fig. 2

Fig. 3

Fig. 4

Fig. 5

EP 2 040 091 B1

Fig. 6